# NEUE EUROPÄISCHE PATENTSCHRIFT

(11) **EP 1 022 553 B2**
(45) Veröffentlichungstag und Bekanntmachung des Hinweises auf die Entscheidung über den Einspruch: **04.08.2010**
(45) Hinweis auf die Patenterteilung: 02.01.2002
(21) Anmeldenummer: 00100703.8
(22) Anmeldetag: 14.01.2000
(51) Int. Cl.: G01M 3/38, G01M 3/00

(54) **Kamerawagen und Verfahren zum Inspizieren von Kanalrohren**
Camera dolly and procedure for inspecting pipelines
Chariot de camera et procédé d'inspection de canalisations

(30) Priorität: 22.01.1999 DE 19902452
(43) Veröffentlichungstag der Anmeldung: 26.07.2000
(73) Patentinhaber: IBAK HELMUT HUNGER GmbH & CO. KG, 24478 Kiel (DE)
(72) Erfinder: Rehse, Heino, 42114 Kiel (DE)
(74) Vertreter: Tönnies, Jan G.

(56) Entgegenhaltungen:
- DE-A- 3 522 149
- US-A- 5 742 517

## Beschreibung

Die Erfindung betrifft einen Kameraträger mit den Merkmalen des Obergegriffs des Anspruchs 1.

Nicht-begehbare Kanalrohre werden regelmäßig auf ihren Erhaltungszustand geprüft. Zu diesem Zweck werden Kamerawagen verwendet, die mit einem Fahrwerk, einer Beleuchtungseinrichtung und einer Kamera versehen sind. Die Kamera ist dabei als Fernsehkamera ausgebildet, die aufgenommenen Bilddaten werden über ein von den Kamerawagen nachgeschlepptes Kabel nach außen geführt und dort an einem Beobachtungsstand ausgewertet.

Aus der DE-A-196 07 913 ist ein Kameraträger zum Inspizieren von Kanalrohren bekannt, der mit zwei elektronischen Kameras versehen ist, die an dem vorderen Ende bzw. an dem hinteren Ende des Kameraträgers in entgegengesetzte Richtungen weisend angeordnet sind, wobei die optischen Achsen in entgegengesetzte Richtungen weisend verlaufen. Aus der DE 43 28 575 C2 ist ein zur Inspektion von Kanälen geeigneter Kamerawagen bekannt, der mit zwei Kameras versehen ist. Die eine Kamera ist dabei an dem vorderen Ende des Kamerawagens nach vorne weisend angeordnet, die andere ist auf dem Kamerawagen zu diesem verschwenk- und ausfahrbar angeordnet.

Der Erfindung liegt die Aufgabe zugrunde, die Bildgewinnung weitestgehend zu automatisieren, wobei es nicht auf eine besondere Erfahrung oder Aufmerksamkeit der Bedienperson ankommt.

Erfindungsgemäß wird diese Aufgabe durch die Merkmale des Anspruchs 1 gelöst, die abhängigen Ansprüche geben vorteilhafte Ausgestaltungen der Erfindung an.

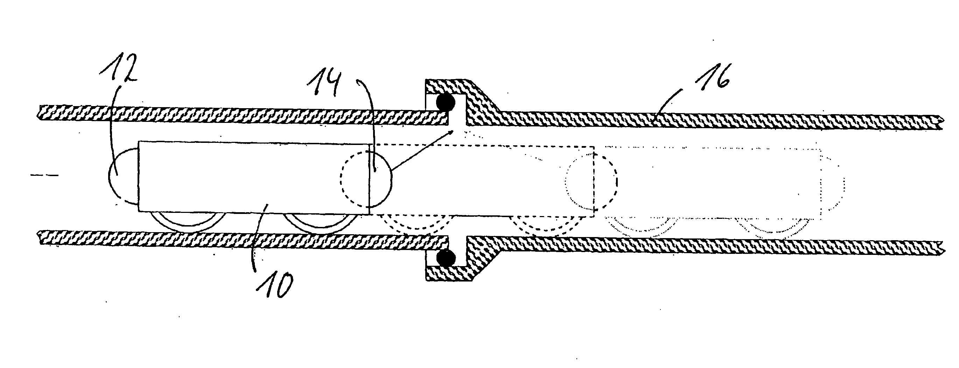

Die Erfindung wird im folgenden anhand einer Zeichnung erläutert. Dabei zeigt die einzige Figur eine schematische Darstellung eines in einem Kanalrohr gezeigten Kamerawagens, der in einer ersten, mit durchgezogenen Linien dargestellten Position, einer zweiten, in gestrichelten Linien dargestellten Position und einer dritten, gepunktet dargestellten Position wiedergegeben ist.

Der Kamerawagen besteht aus einem Fahrwerk, einer Beleuchtungseinrichtung und zwei Kameras, die durch deren Weitwinkelobjektive 12, 14 wiedergegeben sind. Die optische Achse des am vorderen Ende des mit einem Fahrwerk 10 versehenen Kamerawagens angeordneten Weitwinkelobjektivs 12 der ersten Kamera weist in Fahrtrichtung gesehen nach vorne, die optische Achse des Weitwinkelobjektivs 14 der zweiten Kamera, die am hinteren Ende des Kamerawagens angeordnet ist, weist in Fahrtrichtung gesehen nach hinten.

Die optischen Achsen der beiden Weitwinkelobjektive 12, 14 verlaufen dabei parallel zueinander in entgegengesetzte Richtung, sie können aber - anders als zeichnerisch dargestellt - auch zu der Fahrtrichtung geneigt verlaufen.

Die Weitwinkelobjektive erlauben jeweils die Ablichtung eines hemisphärischen Raums, es kann sich dabei insbesondere um sogenannte Fisheye-Objektive handeln. Den beiden Kameras ist jeweils eine Beleuchtungseinrichtung zugeordnet, bei der es sich vorzugsweise um ein Blitzgerät handelt.

Bei dem Durchfahren des Kanals nehmen die Kameras in definierten Streckenabschnitten ein hemisphärisches Bild auf, die vordere Kamera also ein Bild des vor dem Kamerawagen liegenden Raums, die hintere Kamera ein Bild des hinter dem Kamerawagen liegenden Raums. Die erfaßten Bilder werden online über ein Lichtleitkabel aus dem Kanalrohr 16 hinaus zu einem mit einem Speicher versehenen Rechner übertragen, in dem die beiden hemisphärischen Bilder zu einem vollsphärischen Bild zusammengesetzt werden.

Es ist aber auch möglich, die Bilddaten in einem mit dem Kamerwagen mitgeführten Speicher zu speichern und erst nachträglich in einen Rechner einzugeben.

Es versteht sich, daß die halbsphärischen Abbildungen der beiden Weitwinkelobjektivsysteme, die rechnerisch zu einem vollsphärischen Bild zusammengesetzt werden, solche sind, an denen der Ort der optischen Zentren der beiden Weitwinkelobjektivsysteme übereinstimmt. Der Abstand der Orte, an denen die Ablichtungen erfolgen, braucht dabei - anders als in der Abbildung dargestellt - nicht dem Abstand der Objektivhauptebenen der beiden Kameras voneinander zu entsprechen.

Die jeweilige Lage der Kameraeinheiten im Raum bei dem Nehmen einer Ablichtung kann erfaßt und gespeichert werden, um eine Roll- oder Neigungsabweichung der beiden Kameras bei dem Zusammensetzen der von diesen benommenen Bildern rechnerisch zu kompensieren.

Die Gewinnung von digitalen vollsphärischen Panoramabildern, die solcher Kamerawagen ermöglicht, läßt es zu, anhand der gespeicherten Bilddaten nachträglich, also im Büro, virtuell durch den Kanal hindurchzufahren, wobei ein kritischer Ort dann "rechnerisch angefahren" werden kann, indem die entsprechenden Kugelkoordinaten und Streckenpositionen des zu betrachtenden Orts eingegeben werden. In der Praxis wird dies allerdings in sehr viel einfacherer Weise unter Verwendung einer Maus oder dergleichen erfolgen. Einweiterer Vorteil ist dabei, daß ein kritischer Ort, in der Zeichnung als Muffe dargestellt, unter verschiedenen Winkeln betrachtet werden kann, und zwar auch von hinten, wie dies in der Zeichnung durch den durchgezogenen Pfeil wiedergegeben ist.

Die Verwendung eines derart ausgebildeten Kamerawagens erlaubt es, die Bildgewinnung weitestgehend zu automatisieren, auf eine besondere Erfahrung oder Aufmerksamkeit der Bedienperson kommt es nicht an. Die eigentliche Auswertung der Daten erfolgt dann erst zu einem späteren Zeitpunkt, da die zur Auswertung erforderlichen Bilddaten vollständig vorliegen.

Da nur diskrete Bilder in einem bestimmten Abstand - beispielsweise 5 cm - gewonnen werden, kann die Beleuchtungseinrichtung als Blitzlicht ausgebildet sein, so daß ein weitaus weniger aufweniges Energieversorgungssystem eingesetzt werden kann. Bei einer Anordnung des Bilddatenspeichers in dem Wagen selbst kann auf eine Online-Übertragung der Vielzahl von Bilddaten verzichtet werden. Dies macht es möglich, auf das Nachschleppen eines schweren Versorgungs- und Datenübertragungskabels zu verzichten, ein einfaches Sicherungskabel kann genügen. Es kann jedoch vorteilhaft sein, eine einfache Sende- und Empfangsübertragungseinrichtung vorzusehen, die Steuerungsdaten sendet und die Statusdaten sowie ggf. auch gering auflösende Bilddaten an den Beobachtungsstand überträgt.

Es versteht sich, daß die beiden Weitwinkelobjektivsysteme nicht zwingend derart ausgerichtet sein müssen, daß ihre optische Achse mit der Fahrtrichtung übereinstimmt; die optischen Achsen der Weitwinkelobjektivsysteme müssen aber parallel zueinander verlaufen, damit aus den beiden halbsphärischen Bildern rechnerisch vollsphärische Bilder des von dem Kamerawagen durchfahrenen Kanals gebildet werden können. Die zu einem Vollbild zusammenzusetzenden Bilddaten müssen jedoch an einem Ort erfaßt werden, an dem die optischen Zentren der beiden Kameras derselbe ist.

## Patentansprüche

1. Kameraträger zum Inspizieren von Kanalrohren, mit einer Beleuchtungseinrichtung und zwei elektronischen Kameras, von denen die eine an dem vorderen Ende des Kameraträgers und die andere an dem hinteren Ende des Kameraträgers angeordnet ist, wobei die optischen Achsen parallel zueinander in entgegengesetzte Richtung weisend verlaufen **dadurch gekennzeichnet, dass** der Kameraträger als mit einem Fahrwerk ausgerüsteter Kamerawagen ausgebildet ist, die beiden Kameras jeweils mit einem einen hemisphärischen Raum erfassenden Weitwinkelobjektiv (12, 14) ausgerüstet sind, Mittel zum Aufnehmen der Bilder der von den beiden Kameras erfassten hemisphärischen Räume in bestimmten Zeit- oder Raumabständen vorgesehen sind und Mittel zum rechnerischen Zusammensetzen der von den beiden Kameras erzeugten Bilddaten zu einem sphärischen Vollbild unter Berücksichtigung des Abstands der optischen Zentren der beiden Kameras voneinander vorgesehen sind.

2. Kameraträger nach Anspruch 1, **dadurch gekennzeichnet, dass** die Beleuchtungseinrichtung ein Blitzgerät ist.

3. Kameraträger nach Anspruch 1 oder 2, **gekennzeichnet durch** ein Lichtleitkabel zum Online-Übertragen der von den beiden Kameras erzeugten elektronischen Bilddaten aus dem Kanalrohr (16) hinaus zu einem Speicher.

4. Kameraträger nach Anspruch 1 oder 2, **gekennzeichnet durch** einen mit dem Kamerawagen mitgeführten Speicher zum Ablegen der von den beiden Kameras erzeugten elektronischen Bilddaten.

## Claims

1. Camera carrier for inspecting sewer pipes, with a lighting unit and two electronic cameras, whereof one is located at the front end of the camera carrier and the other is located at the back end of the camera carrier, wherein the optical axes are aligned parallel to each other and pointing in opposite directions, **characterized in that** the camera carrier is made as a camera truck with a chassis, the two cameras being in each case equipped with a wide angle lens (12, 14),
means for taking pictures of the hemispherical spaces covered by both cameras in specific time or space intervals are provided and
means for mathematical assembly of the image data produced by the two cameras to give a spherical full image, whilst taking account of the mutual spacing of the optical centres of both cameras are provided.

2. Camera carrier according to claim 1, **characterized in that** the lighting unit is a flash unit.

3. Camera carrier according to claim 1 or 2, **characterized by** light conducting cable for the online transmission of electronic image data produced by both cameras from the sewer pipe (16) to a memory.

4. Camera carrier according to claim 1 or 2, **characterized by** a memory carried by the camera truck for filing the electronic image data produced by the both cameras.

## Revendications

1. Support de caméras pour l'inspection de tuyaux de canalisation, comprenant un dispositif d'éclairage et deux caméras électroniques dont l'une est disposée à l'extrémité avant dudit support de caméras et l'autre est disposée à l'extrémité arrière du support de caméras, les axes optiques s'étendant parallèlement l'un à l'autre tout étant orientés dans des directions opposées, **caractérisé par le fait que** ledit support de caméras est réalisé en tant que chariot-caméras équipé d'un train de roulement, que les deux caméras sont équipées chacune d'un objectif à grand angle (12, 14) qui couvre un espace hémisphérique, que l'on prévoit des moyens destinés à enregistrer les images des espaces hémisphériques saisis par les deux caméras, à des intervalles temporels ou spatiaux déterminés et que l'on prévoit des moyens destinés à assembler par calcul les données d'image produites par les deux caméras pour obtenir une image sphérique complète, et ceci en considération de la distance séparant les centres optiques des deux caméras.

2. Support de caméras selon la revendication 1, **caractérisé par le fait que** ledit dispositif d'éclairage est un appareil à éclairs.

3. Support de caméras selon la revendication 1 ou 2, **caractérisé par** un câble à fibres optiques destiné à transférer en ligne les données électroniques d'image produites par les deux caméras, hors du tuyau de canalisation (16) vers une mémoire.

4. Support de caméras selon la revendication 1 ou 2, **caractérisé par** une mémoire entraînée avec le chariot à caméras, pour la mémorisation des données électroniques d'image produites par les deux caméras.
